# EUROPEAN PATENT APPLICATION

(11) **EP 2 995 362 A1**
(43) Date of publication of application: **16.03.2016**
(21) Application number: 14425112.1
(22) Date of filing: 11.09.2014
(51) Int. Cl.: B01D 46/24, B01D 46/50, B01D 29/21, B01D 53/32

(54) **Filter element having a low accumulation of electrostatic charges**

(71) Applicant: Filtrec SpA, 25046 Cazzago San Martino (Brescia) (IT)
(72) Inventor: Modina, Sergio, Castelli Calepio (Bergamo) (IT)
(74) Representative: Bruni, Giovanni

(57) **Abstract**

Filtration element (100) comprising a multi-holed inner support tube (4), a multi-holed outer protection (3), two opposed terminals (1, 2) and a filtration septum (11). The filtration septum (11) realized by means of dedicated materials, technologies and methodologies guarantees the electrostatic charges to be balanced both upstream and downstream of the same. Moreover, the terminals (1, 2) realized in conductive polymer ensures the electric continuity of the filtration element (100).

## Description

The present invention relates to a filtration element which controls fluid contamination thus remarkably reducing the formation of electrostatic charges generated in the circuit owing to the triboelectric effect. The triboelectric effect is known in the technical field and consists in the electric charges transfer, and therefore in the generation of a voltage, between different materials (at least one thereof being isolating), which occurs when these materials are crossed by a fluid which generates friction while passing therethrough.

Recently, there has been a remarkable evolution in the design and realization of oil-hydraulic plants which use hydraulic fluids having more than 90% saturation, which are part of groups II° and III° with low zinc and sulphur content, which even if corrected with special additives, have remarkably reduced electric conductivity (less than 100 pS/m); in the construction of plants ever more compact and with ever higher working pressure and flow rates with significant consequent fluid speeds; in the use of filtration materials with high accumulation capacity and ever greater efficiency with consequent triboelectric effect while the fluid passes through.

These factors favour the formation and the accumulation of electrostatic charges thus generating electrostatic discharges, which can damage the cartridge and degrade the fluid. In addition, in many cases, they can interfere and damage the sophisticated electronic command and control systems of the machine tools.

At the state of the art there are known filtration elements able to avoid the formation of electrostatic charges, which use, for example, a suitable earthing of the plants and relative components or with the addition of specific antistatic additives.

However, such measures to be carried out on the plants are complex and expensive. Moreover, concerning the plants using antistatic fluids, their usage and manipulation require generally qualified operators, in addition to high management and continuous control costs of the conductivities in the various points of the plant which are also not so safe from the safety point of view, the exposition to such chemicals is in fact not recommended.

Therefore, there exists a need of innovation to allow the above described technical problems to be overcome without undertaking important measures on the plants which use filtration elements.

Object of the present invention is a filtration element which is also able to eliminate, itself, possible electrostatic discharges between the various layers of the filtration septum and the components of the circuit.

Such aim is obtained by optimizing the various components of the innovative filtration element according to specific design criteria, verified by means of dedicated tests and innovative materials. The various embodiments of the invention will be now described by means of examples with reference to the appended drawings, in which:
Figure 1 is an exploded view of the filtration elements according to the invention.
Figure 2 is a cross section of the filtration septum of fig. 1 in the sealing step of the same.
Figure 3 is a cross section of the filtration septum of fig. 1, which shows the filtration septum sealed.
Figure 4 shows an assembling step of the filtration element according to the invention.
Figure 5 shows a detail of the reticular structure of the filtration septum.

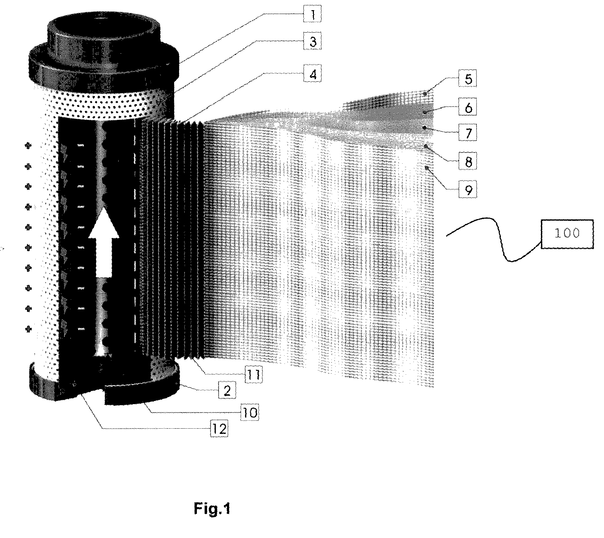

A first embodiment of the inventive object, as shown in figure 1, shows the filtration element as a whole, it comprising a multi-holed inner support tube 4, a multi-holed outer protection 3, two opposed terminals 1, 2 and a filtration septum 11 positioned between the inner tube 4 and the outer protection 3.

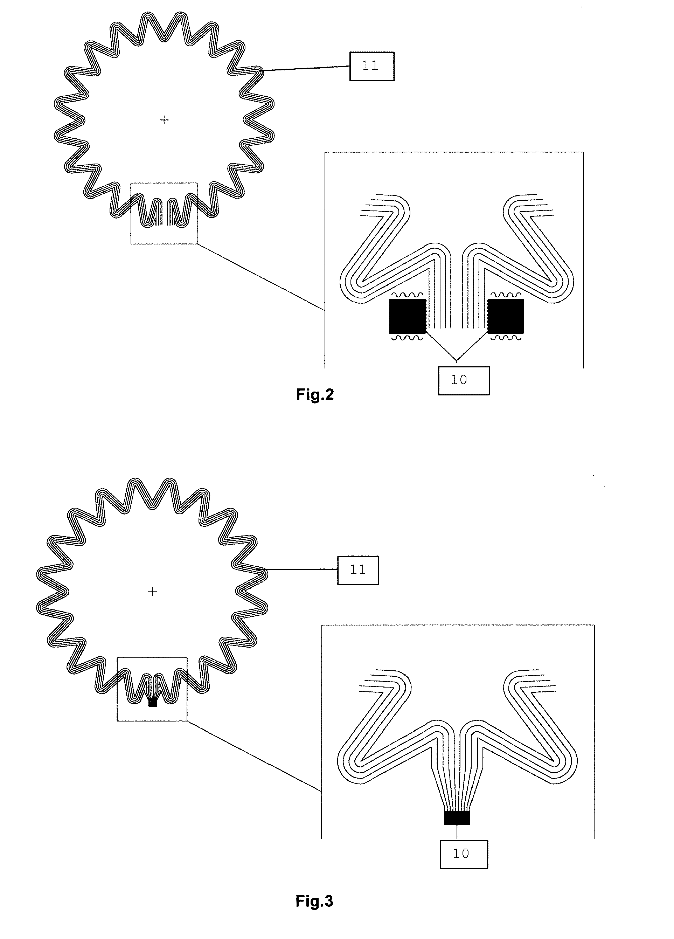

Going from outside to inside said filtration septum 11 is made up of a nonconductive outer net 5 (having surface resistivity > 10¹² Ω), a conductive spunbonded fabric 6 (or spunbond, having surface resistivity between 10¹Ω and 10³Ω), a main nonconductive filtration layer 7, a conductive spunbonded fabric 8 (or spunbond) and a conductive or in plastic material inner support net 9. The multilayer material is cut by the bobbin with a longitudinal cut and is folded to provide a filtration septum 11 as sown in figs. 2 and 3.

The filtration septum 11 has a special closure 10 realized by ultrasound welding by means of knurled sonotrodes and is fixed to terminals 1, 2 by means of a resinous glue 12 and a particular assembling method. The ultrasound welding is provided by applying a variable normal charge to the pieces to be welded and by putting in vibration a portion with respect to the other ones by means of the vibrating group formed by a piezoelectric transducer and a booster to the end of which a sonotrode is screwed. The sonotrode generates friction between the portions by means of a vibration with ultrasonic frequency. This intense vibration generates heat and as a consequence the thermoplastic materials melt, so that welding and assembly are ensured.

A first innovative aspect of the filtration element 100 object of the present invention relates to the filtration septum 11 realized with nonconductive main fibre and conductive spunbond arranged close with respect to each other according to dedicated technologies, as for example pre-heated pleating and thermo-melting of filtration materials. Moreover, the closure 10 of the last two folds of the filtration septum 11, as shown in figs. 2 and 3, is carried out with ultrasound welding which ensures a perfect seal at the passage of the fluid and a perfect electric continuity of the fibers, thus ensuring a constant value of resistivity between the various conductive materials (spunbond) between the upstream area and the downstream area of the filter.

This peculiarity of the filtration septum guarantees the electrostatic charges to be balanced both upstream and downstream of said septum, thus eliminating differences of potential on the main fibre, which are the cause of electrostatic discharges.

Said ultrasound welding is carried out by controlling specific parameters such for example frequencies, pressures and times. For filtration elements subject to high differential pressures and/or other particular conditions, the seal of the filtration septum 11 is integrated with a seal by means of bi-component epoxy resin. When the seal is ended the electric continuity between the spunbond layers 6, 8 of the fibre 7 is verified by a means apt to detect its conductivity.

The filtration septum 11 can also be protected from the entrance side of the fluid by an outer cage in nonconductive plastic material and can be supported from the exit side of the fluid by a tube with suitable holes in conductive plastic or metal material (having surface resistivity between 10³Ω and 10⁶Ω).

Another innovative aspect relates to the terminals 1, 2 of the filtration element 100 which are made up of conductive plastic material (having surface resistivity between 10³Ω and 10⁶Ω) additioned with nanotubes in carbon or carbon fibres.

In particular, the terminals 1, 2 are realized in conductive polymer which ensures the electric continuity of the filtration element 100. The bottom has a substantially "U" shaped section and the filtration septum 11 is introduced between the wings of said "U" and stops itself against the bottom of the "U".

The contact section of the filtration septum 11 with the bottom is therefore of remarkable extension with respect to the known applications, for example contact pin, and this guarantees great conductivity between the components, being in contact with the whole circular crown.

A double control pressing system (test of the axial charge and test of the filtration element conductivity) guarantees the function of the filtration element.

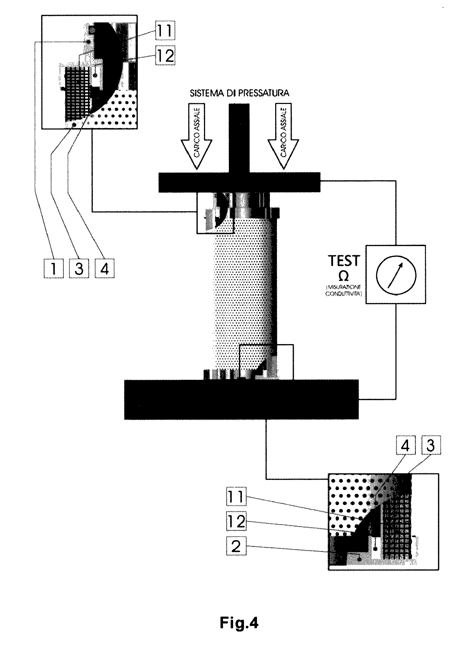

The assembly steps, as shown in fig. 4, are carried out by a suitable machine which firstly delivers a quantity of bonding resin in the terminal 1 where the yet pre-assembled filtration septum will be introduced. A system of calibrated weights (at least ten times the weight of the pre-assembled septum) will allow the perfect contact between the filtration septum 11 and the terminal 1 so that the floatation phenomenon in the bonding resin is avoided. In the following the bonding resin is delivered in the terminal 2 and also here the pre-assembled septum is then introduced. At this point, the filtration element is introduced in a suitable pressing machine (which generates a force at least ten times the weight of the pre-assembled septum and maintained for a pre-fixed interval time greater than the polymerization time of the used bonding resin).

At the same time the equipment carries out the in-line control of the electric conductivity between the two terminals 1, 2.

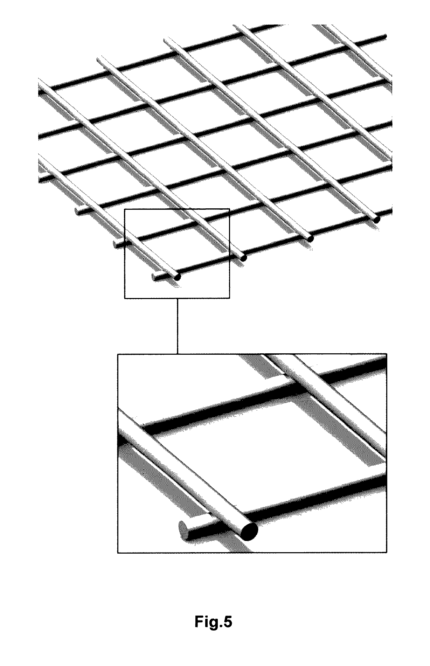

Another embodiment of the present invention, as shown in fig. 5, provides that the outer net 5 and the inner net 9 are of nonconductive plastic material, having a mesh between 100 µm and 2000 µm. The passage holes of the fluid are preferably of rhomboidal, square or rectangular shape. The weft and warp of the net are on two different planes, to ensure an optimal passage of the fluid.

Another embodiment provides the usage of support nets 5 and 9, made up of conductive plastic materials, which have draining function; these nets can be realized of polymers resistant to hydraulic fluids by means of extrusion or weaving technologies.

Another embodiment provides the usage of an outer net 5 and of an inner support net 9 in not protected metal material or metal material with conductive superficial coatings, which guarantee an electric conductivity between the various elements making up the filtration element. This structural solution is recommended in case of very difficult usage applications, with differential high pressures at stake due to high viscosity of the fluid and significant flow rates.

Another embodiment provides the usage of a conductive main layer 7 made up of a spunbonded fabric, which can be realized with various single or coupled materials formed by glass microfibres or nanofibres/microfibres of polymers (as for example polyester PBT, PP) which can be linked by adhesives of acrylic or epoxy kind or thermo-welded with the addition of microfibres or nanofibres of carbon or conductive polymers, which increase the electric conductivity.

The main filtration layer has different absolute filtration degrees between 1 µm and 50 µm (absolute efficacy 99,99%) made up of different layers with progressively smaller dimension of the fibres, which ensure uniformity of the pores from a maximum dimension up to the required pore. In addition to guarantee a constant stability during the filter life cycle, these layers ensure a high capacity of accumulation of the solid pollutant particles present in the fluid.

Another embodiment provides the usage of a resinous adhesive 12 in conductive material for gluing the terminals to the filtration septum, and in addition to the traditional charges which increase the mechanic features and of fluid and temperature resistance, are additioned with charges of conductive materials which guarantee the electric conductivity.

Another embodiment provides the closure 10 of the filtration septum 11 with a resinous adhesive in conductive or dissipative material, and in addition to the traditional charges which increase the mechanic features and of fluid and temperature resistance, are additioned with charges of conductive materials which guarantee the electric conductivity.

While this invention has been shown and described with reference to at least one embodiment, it will be understood that various changes can be made without departing from the scope of the invention. Moreover, it is to be intended that the embodiment or embodiments described are only example and do not intend to limit the scope of the invention and its application or configurations. The summery and the detailed description provide instead the experts in the field with a convenient guide to implement at least an exemplary embodiment, being clear that many variants can be made in the function and assembly of the elements described therein, without departing from the scope of the invention encompassed by the appended claims and technical-legal equivalents thereof.

## Claims

1. Filtration element (100) comprising a multi-holed inner support tube (4), a multi-holed outer protection (3), two opposed terminals (1, 2) and a filtration septum (11) positioned between the inner tube (4) and the outer protection (3), **characterized in that** said terminals (1, 2) are realized in conductive polymer which ensures the electric continuity of the filtration element (100).

2. Filtration element (100) according to claim 1, wherein said filtration septum (11) comprises a closure (10) realized by means of ultrasound welding which ensures a perfect sealing at the passage of the fluid and a perfect electric continuity of the filtration septum (11).

3. Filtration element (100) according to claim 2, wherein the ultrasound welding is obtained by using knurled sonotrodes.

4. Filtration element (100) according to any one of the preceding claims, wherein said filtration septum (11) is fixed to the, terminals (1, 2) by means of a resinous glue (12) of conductive material.

5. Filtration element 100 according to any one of the preceding claims, wherein going from outside to inside said filtration septum 11 comprises an outer net 5, a layer of conductive spunbonded fabric 6, a main filtration layer 7, a conductive spunbonded fabric 8 and an inner support net 9.

6. Filtration element 100 according to claim 4, wherein said outer layer 5 is a nonconductive net with surface resistivity > 10¹² Ω.

7. Filtration element 100 according to claim 4, wherein said layer of conductive spunbonded fabric 6 has surface resistivity between 10¹Ω and 10³Ω.

8. Filtration element 100 according to any one of claims 4 to 6, wherein said outer net 5 and inner net 9 are in nonconductive plastic material having mesh between 100 µm and 2000 µm.
